Europäisches Patentamt

**European Patent Office**

Office européen des brevets

(11) Numéro de publication: **0 218 501**
**B1**

(12) # FASCICULE DE BREVET EUROPEEN

(45) Date de publication du fascicule du brevet:
09.05.90

(51) Int. Cl.⁵: **A01N 37/44**, A01N 37/46,
A01N 61/00, A01G 7/00

(21) Numéro de dépôt: 86401964.1

(22) Date de dépôt: 09.09.86

(54) **Procédé provoquant l'augmentation de la fécondation florale des végétaux.**

(30) Priorité: 17.09.85 FR 8513738

(43) Date de publication de la demande:
15.04.87 Bulletin 87/16

(45) Mention de la délivrance du brevet:
09.05.90 Bulletin 90/19

(84) Etats contractants désignés:
AT BE CH DE FR GB IT LI LU NL SE

(56) Documents cités:
FR-A- 2 403 024
FR-A- 2 495 608
FR-A- 2 503 144
FR-A- 2 503 153

CHEMICAL ABSTRACTS,
vol. 66, no. 5, 30 janvier 1967, page 1642, résumé
no. 17105y, Columbus, Ohio, US; E.A. BRITIKOV et al.:
"Effect of proline and its antimetabolites on pollen
germination and pollen tube growth", & FIZIOL.
RAST. 13(6), 978-87 (1966) TR. 1973, 8(8), 293-5 000
CHEMICAL ABSTRACTS,
vol. 99, no. 9, 29 août 1983, page 228, résumé no. 65917t,
Columbus, Ohio, US; & RO-A-77 163 (INSTITUTUL DE
STIINTE BIOLOGICE, BUCURESTI) 30-07-1981

(73) Titulaire: De Mil, Edmond, 140, rue St. Charles,
F-75015 Paris(FR)
Titulaire: Morelle, J.V., 170 Avenue Parmentier,
F-75010 Paris(FR)
Titulaire: Lauzanne, E., 57 Avenue de la République,
F-75011 Paris(FR)

(72) Inventeur: De Mil, Edmond, 140, rue St. Charles,
F-75015 Paris(FR)
Inventeur: Morelle, J.V., 170 Avenue Parmentier,
F-75010 Paris(FR)
Inventeur: Lauzanne, E., 57 Avenue de la République,
F-75011 Paris(FR)

(74) Mandataire: Dejoux, André, 33, rue de Fontarabie,
F-75020 Paris(FR)

## Description

Il est bien connu que le problème posé par la coulure est actuellement le plus important qui soit posé à l'agriculture, le résoudre, même partiellement permettrait une certaine normalisation de la production.

Les travaux de E. Perdrizet, J.C.Vallée, C.Martin ainsi que ceux de Margara, Bouniols et alii on montré, en laboratoire, que le sucre et le sel pouvaient avoir une action sur le mise à fleur, que les phenolamides et la proline étaient impliquées, sans que cela ne conduise à une pratique agricole.

Les travaux de Britikov, Fuzishita, Zolotovitch sur la stérilité mâle ont amélioré nos connaissances sans trouver d'application pratique.

Il ne semble pas qu'il y ait actuellement de technique connue ou de procédé qui permette d'éviter la coulure (non fécondation florale due aux conditions climatiques et qui pourrait être due à la stérilité du pollen). Dans les domaines agricole, horticole, sylvicole, aquicole etc...il n'y a pas de procédé qui augmente la fécondation.

L'invention est caractérisée par une combinaison de moyens en vue d'augmenter la fertilité florale (la capacité de fécondation surtout en mauvaises conditions climatiques), par des apports de structures lipoaminoacides et/ou dérivées, pendant la période comprise entre l'induction florale et la fin de l'inflorescence, avec des quantités apportées à l'hectare comprises entre 5 et 100 grammes et appliquées en pulvérisations foliaires avec des solutions ou suspensions aqueuses dont les concentrations sont comprises entre 10 et 1000 ppm (parties par million).

Il s'agit d'améliorer la qualité du matériel floral (étamines et pistils). La période d'emploi se situe après et non pas avant l'induction florale : les structures lipoaminoacides et dérivées ne semblent pas avoir d'action sur l'induction florale, elles accélèrent et amplifient le processus floral, elles peuvent donc être employées pendant toute la durée de l'inflorescence.

Sur certains végétaux, les pois notamment, on peut avoir intérêt à pulvériser les structures lipoaminoacides en pleine floraison afin que même si les conditions climatiques ne demeurent pas favorables, la fécondation soit assurée jusqu'à la fin du cycle, ce qui conduit à produire plus de gousses et plus pleines.

Outre leur action en cas de coulure on peut aussi attendre des structures lipoaminoacides une augmentation de 10 à 20% des fleurs fécondées en conditions normales.

L'invention est caractérisée par le fait que les structures employées sont des structures Acyl-Amino Acides (soit lipomonoaminoacides, soit polyaminoacides) et dérivées telles que sels métalliques et tout sel formé avec une ou des amines, ou avec des acides aminés basiques. Ces structures pouvant être employées seules ou en association avec toute substance présentant un avantage pour le végétal.

Selon un mode préférentiel, l'invention est caractérisée par la précision des doses employées tant en ce qui concerne la quantité par unité de surface qu'en ce qui concerne la concentration des solutions ou suspensions aqueuses utilisées. A titre d'exemple l'acide butyryl collagénique, sur blé, doit, pour augmenter la fécondation, donc le nombre de grains, être apporté préférentiellement en pulvérisations foliaires, dès les premières sorties d'étamines, avec 20 grammes par hectare et 200 litres d'eau soit une concentration de 100 ppm.

Les limites d'activité étant situées entre 5 et 50 grammes par hectare et entre 10 et 1000 ppm (parties par million).

Dans ces conditions l'augmentation des rendements peut être 10 ou 15 quintaux par hectare, mais les résultats sont différents suivant les variétés de blé utilisé ; ils sont meilleurs avec Pernel, Arminda ou Norman qu'avec Camp Rémy.

La liaison étroite qui existe entre les résultats enregistrés et les variétés est elle même influencée par les conditions climatiques de l'année, ce qui montre que l'action fécondante des structures lipoaminoacides conduit à obtenir un résultat proche du potentiel de la variété considérée mais qu'elle est sans action sur le niveau de ce potentiel. L'action sur les rendements si elle est étroitement liée au nombre de grains ou de baies fécondées, est aussi étroitement liée au niveau de fertilisation générale avec les engrais et les oligo-éléments. L'action sur la fécondation florale de l'acide butyryl collagenique ne peut se traduire en rendement supplémentaire que si la fertilisation est adéquate au besoin et permet un potentiel plus élevé.

Sur les vignes sensibles à la coulure et notamment grenache, merlot, pinot noir et chardonnay, il n'est pas rare d'obtenir des gains en rendement de plusieurs milliers de kilo de raisin avec des conditions d'emploi du butyryl collagène voisines de celles utilisées sur le blé.

Les Acyl Amino Acides dont la chaîne grasse ne dépasse pas 12 atomes de carbone doivent être utilisés avec des quantités par hectare comprises entre 5 et 50 grammes et préférentiellement pulvérisés à l'aide de solutions ou suspensions aqueuses dont la concentration en lipoaminoacides est comprise entre 10 et 1000 ppm. Il faut augmenter sensiblement les doses employées quand on utilise des lipoaminoacides dont la chaîne grasse est supérieure à 12 atomes de carbone.

Les concentrations peuvent être adaptées aux variétés, espèces ou conditions du culture mais habituellement elles conviennent pour céréales, riz, maïs, tournesol, pois, haricots, vignes, arbres fruitiers, etc...

La pulvérisation foliaire peut être appliquée dès la formation du bourgeon floral mais il semble préférable d'intervenir à la sortie des premières fleurs, sur la vigne notamment. On peut renouveler l'apport huit jours après le début de la floraison si pour des raisons climatiques l'inflorescence n'est pas terminée.

Pour résumer, le procédé consiste à appliquer préférentiellement en pulvérisations foliaires, en vue d'amplifier et d'accélérer l'inflorescence, des structures lipoaminoacides ou dérivées, cette application devant être faite en cours d'inflorescence, avec des dosages par hectare bien définis et dilués dans l'eau à des concentrations précises.

On peut remarquer que les Brevets Morelle 2503144 et 2503153 du 2 avril 1981 ne décrivent ni ne revendiquent aucune action relative à la floraison qui est la conséquence d'un processus métabolique bien particulier, et que le Brevet n° 2403024 de 1977 ne revendique que la germination, le développement,les effets antifongiqes et anti parasitaires, sans aucune référence à la floraison: celle-ci étant induite par un métabolisme très spécifique. La fécondation totale dépend du potentiel du pollen qui est augmenté dans les conditions d'emploi décrites ici.

EXEMPLES DE PREPARATIONS DESTINEES A AUGMENTER LA FECONDITE FLORALE :

a) Butyryl collagenate de cuivre 0,012 % Lauroyl collagenate d'éthanolamine 0,006 % Eau

b) Acide butyryl collagenique 0,006 % Alcool gras polyoxyéthyléné 0,003 % Eau

c) Caprylyl kératinate de cuivre 0,08 % Lauroyl collagenate d'éthanolamine 0,04 % Eau

d) Caprylyl glycinate de cuivre 0,08 % Lauroyl collegenate d'ethanolamine 0,04 % Eau

e) Butyryl Proline 0,003 % Eau

f) Butyryl Hydroxyproline 0,003 % Eau

**Revendications**

1°) Procédé permettant d'augmenter le fécondité de la floraison caractérisé par l'apport aux végétaux,entre l'induction florale et la fin de l'inflorescence, de structures lipoaminoacides et/ou dérivées.

2°) Procédé selon la revendication 1 caractérisé par l'emploi de quantité à l'hectare comprises entre 5 et 100 grammes.

3°) Procédé selon les revendications 1 et 2 caractérisé par l'emploi de concentrations dont la teneur en matières actives est comprise entre 10 ppm et 1000 ppm.

4°) Procédé selon les revendications 1,2, et 3 caractérisé en ce que la fertilité florale (ou fécondité) est augmentée par l'emploi préférentiel de butyryl collagène pulvérisé sur les feuilles en utilisant de 10 à 30 grammes dilués dans 100 à 300 litres d'eau par hectare.

5°) Procédé selon les revendications 1,2,3 et 4, caractérisé en ce que l'emploi des lipoaminoacides et structures dérivées peut être effectué en association avec des structures similaires présentant un effet de synergie.

6°) Procédé selon les revendications 1,2,3, caractérisé en ce que les structures dérivées utilisables seules ou en synergie sont obtenues par salification du carboxyle libre de la fraction acide aminé de chaque molécule, par une base organique, ou biologique, ou par un métal.

**Claims**

1. Process for increasing the floral fertility of plants consisting of the step of applying to the plant during the period between floral induction and the end of inflorescence amounts of lipoaminoacids or derivatives.

2. The process of claim 1, wherein the lipoaminoacids are applied to the plants in amounts between 5 and 100 g per hectare.

3. The process of claims 1 and 2 wherein the lipoaminoacids are applied in the form of suspensions or solutions in water, at concentrations between 10 and 1.000 ppm.

4. The process of claims 1, 2 and 3, wherein the floral fertility (or fecundity) is increased by spraying on the leaves, preferably butyryl collagene concentrations 10 to 30 grams diluted in 100 to 300 liters of water per hectare.

5. The process of claims 1, 2, 3 and 4, wherein the application of lipoaminoacids and derivatives can be carried out in association with similar structures to obtain a synergetic effect.

6. The process of claims 1, 2 and 3, wherein the derivatives of lipoaminoacids used, solely or in synergy, are obtained by salification of the free carboxyle of the aminoacid fraction of each molecule by an organic or biological base, or by a metal.

**Patentansprüche**

1. Verfahren zur Verbesserung der Blütenkeimung von Pflanzen, dadurch gekennzeichnet, daß zwischen dem Beginn und dem Ende der Blüte Lipoaminosäuren und/oder deren Derivate aufgebracht werden.

2. Verfahren nach Anspruch 1, dadurch gekennzeichnet, daß pro Hektar zwischen 5 und 100 g aufgebracht werden.

3. Verfahren nach den Ansprüchen 1 und 2, dadurch gekennzeichnet, daß die aktiven Substanzen in Konzentrationen zwischen 10 ppm und 1000 ppm verwendet werden.

4. Verfahren nach den Ansprüchen 1, 2 und 3, dadurch gekennzeichnet; daß die Blütenkeimung (oder Fruchtbarkeit) vorzugsweise durch die Aufbringung von pulverisiertem Butyrylcollagen auf die Blätter unter Verwendung von 10 bis 30 g, verdünnt in 100 bis 300 l Wasser, pro Hektar erhöht wird.

5. Verfahren nach den Ansprüchen 1, 2, 3 und 4, dadurch gekennzeichnet, daß die Verwendung der Lipoaminosäuren und davon abgeleiteter Verbindungen gemeinsam mit ähnlichen Verbindungen durchgeführt werden kann, die einen Synergieeffekt liefern.

6. Verfahren nach den Ansprüchen 1, 2, 3, dadurch gekennzeichnet, daß die allein oder synergistisch verwendbaren Derivate durch Salzbildung der freien Carboxylgruppe des Aminosäureteiles jedes Moleküls mittels einer organischen oder einer biologischen Base oder durch ein Metall erhalten werden.